# EUROPEAN PATENT SPECIFICATION

(11) **EP 1 857 645 B1**
(45) Date of publication and mention of the grant of the patent: **08.09.2010**
(21) Application number: 07009573.2
(22) Date of filing: 12.05.2007
(51) Int. Cl.: F01L 3/08

(54) **Valve stem seal**
Ventilschaftabdichtung
Joint de tige de soupape

(30) Priority: 19.05.2006 JP 2006140069
(43) Date of publication of application: 21.11.2007
(73) Proprietor: Carl Freudenberg KG, 69469 Weinheim (DE)
(72) Inventor: Kobayashi, Mitsugu c/o NOK Corporation, Fukushima-shi Fukushima 960-1193 (JP)

(56) References cited:
- EP-A- 0 566 059
- EP-A- 1 092 841
- EP-A- 1 854 965
- JP-A- 10 205 623
- JP-A- 2004 068 888
- JP-U- 2 003 001
- JP-U- 61 017 105
- US-A- 4 325 558
- US-B1- 6 394 463

## Description

### Technical Field

The present invention relates to an arrangement according to the preamble of claim 1, comprising a valve stem seal for sealing a valve stem used where a valve for intake and exhaust of an internal combustion engine is arranged.

### Background Art

US 6,394, 463 B1 shows an arrangement with features according to the preamble of claim 1. Further similiar arrangements are shown in EP 1 092 841 A1, JP 10-205 623 A, JP 61-17 105 U and EP 1 854 965 A1.

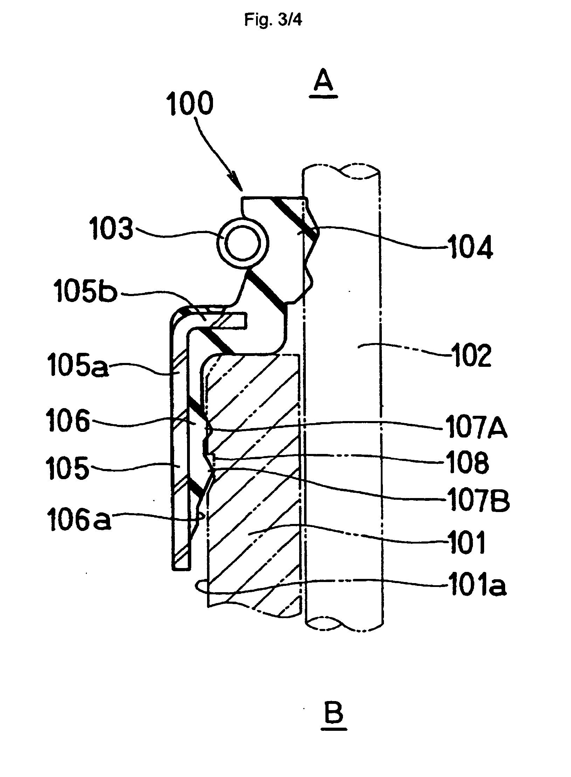

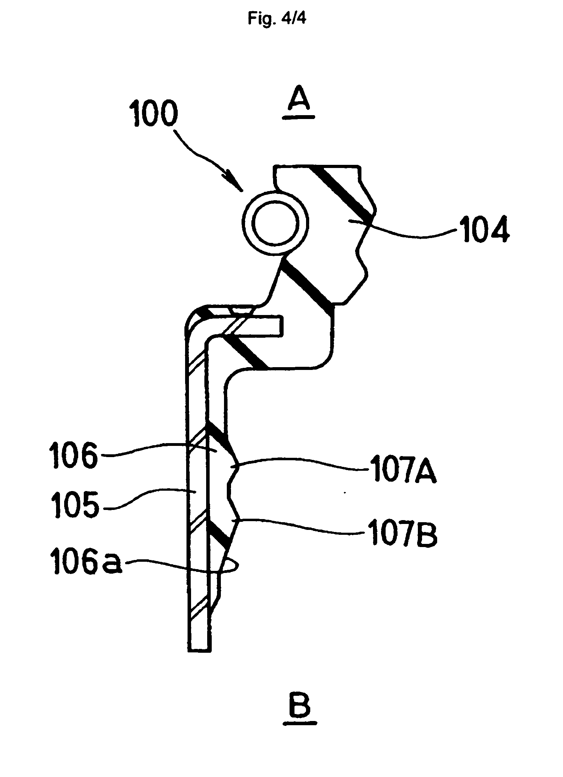

Traditionally, seals such as shown in Fig. 3 and Fig. 4 have been known as a valve stem seals comprising an inner peripheral fitting part having a plurality of fitting projections formed axially side-by-side on the inner peripheral surface thereof, arranged at the inner peripheral side of an attachment ring (See unexamined Patent Publication JP 11-351402 A and unexamined Patent Publication JP 2003-343733 A).

This valve stem seal 100 is mounted and fixed in the fitted condition to the end part of an outer peripheral surface 101 a of a valve stem guide 101, is comprising: a seal lip 104 comprising a garter spring 103 extending toward a sealing fluid side-A for sealing a valve stem 102 to apply a tension to the outer peripheral side; an approximately L-letter shaped metal attachment ring 105 having a seal lip 104 arranged at a flange part 105b extending to the inner diameter direction from the end part of the sealing fluid side-A of the cylindrical part 105a extending axially; and an inner peripheral fitting part 106 of the rubber elastic body integrally molded with the seal lip 104 at the opposite of a sealing fluid side-B from the seal lip 104. Furthermore, the inner peripheral fitting part 106 is arranged at the inner peripheral side of the cylindrical part 105a of the attachment ring 105, and a plurality of fitting projections (107A,107B) are formed axially side-by-side on the inner peripheral surface 106a thereof. The fitting projections 107A of the sealing fluid side positioned at the sealing fluid side-A among these fitting projections 107 is drawn and pressed onto the outer peripheral surface 101 a by the inner peripheral fitting part 106 fitting into the valve stem guide 101 to ensure the sealing performance, and the fitting projections 107B of the opposite of the sealing fluid side is fitted with a concave part 108 formed on an outer peripheral surface 101a of the valve stem guide 101 to prevent disengaging of the valve stem seal 100 from the valve stem guide 101.

However, the fitting projections 107 is designed to allow easy mounting with hand assembling or the like using a low fitting force by employing a projection shape to make the contact area smaller, therefore, when mounting the valve stem guide 101 to the valve stem seal 100 with hand assembly work, the fitting force is small, and moreover, the outer peripheral side of the inner peripheral fitting part 106 having the fitting projections 107 formed thereon is covered by the metal attachment ring 105, therefore it is difficult to confirm by hand feel that the fitting projections 107B of the opposite of the sealing fluid side is fitted with the concave part 108 formed on the valve stem guide 101, hence, work to reconfirm the fitted condition is required, causing a problem of reduced work efficiency. Incidentally, significantly increasing the fitting force could not be an effective solution as it will hinder hand assembly work.

### Disclosure of the Invention

The present invention is made to solve the aforegoing problems, and the purpose is to provide a valve stem seal capable of offering a small fitting force so as to allow the valve stem seal to be mounted to the valve stem guide by hand assembling, as well as allowing a hand to sense and confirm that the fitting projections formed on the inner peripheral surface of the inner peripheral fitting part is fitted into the concave part of the outer peripheral surface of the valve stem guide.

To achieve the above described purpose, a valve stem seal comprises the features of claim 1 of this invention.

A valve stem seal is comprising a seal lip for sealing the valve stem, a metal attachment ring having said seal lip arranged at the end part of the sealing fluid side thereof and an inner peripheral fitting part of a rubber elastic body having a plurality of the fitting projections formed axially side-by-side on the inner peripheral surface thereof, wherein the fitting projections of the opposite of the sealing fluid side among said fitting projections are fitted and mounted to a concave part formed on the outer peripheral surface of a valve stem guide, and wherein said inner peripheral fitting part is formed with: the inner peripheral fitting part of the sealing fluid side arranged at the inner peripheral side of said attachment ring, and having the fitting projections other than said fitting projections of the opposite of the sealing fluid side formed on the inner peripheral surface thereof; and with the inner peripheral fitting part of the opposite of the sealing fluid side thicker than the inner peripheral fitting part of the sealing fluid side, formed so as to protrude from the end part of the opposite of the sealing fluid side of said attachment ring, and having said fitting projections of the opposite of the sealing fluid side formed on the inner peripheral surface thereof.

The present invention produces the following effect. More specifically, in a valve stem seal according to claim 1 of this invention comprising the above described constitutions, the inner peripheral fitting part of the opposite of the sealing fluid side is formed so as to protrude from the end part of the opposite of the sealing fluid side and the outer peripheral surface thereof is not covered with the attachment ring, thereby the thickness thereof can be made thicker than that of the inner peripheral fitting part of the sealing fluid side to increase the rigidity, and thereby the load difference (load reduction amount) can be made greater at the time when the fitting projections of the opposite of the sealing fluid side formed on the inner peripheral surface thereof is fitted into the concave part formed on the outer peripheral surface of the valve stem guide, allowing the mounting feel ("JUST" feel) of the fitted condition to be felt by hand, eliminating the confirmation work and increasing work efficiency.

In addition, even when the thickness of the inner peripheral fitting part of the opposite of the sealing fluid side is increased to increase the rigidity, the outer peripheral surface thereof is not covered with the metal attachment ring and thus may be bent to the outer peripheral side, thereby fitting force becomes greater at the time of assembling allowing hand assembling to be performed without difficulty.

Moreover, when the fitting projections other than the fitting projections of the opposite of the sealing fluid side formed on the inner peripheral surface of the inner peripheral fitting part of the sealing fluid side is drawn and pressed onto the outer peripheral surface of the valve stem guide by the fitting force of the inner peripheral fitting part of the sealing fluid side, since the outer peripheral side of the inner peripheral fitting part of the sealing fluid side is covered with the metal attachment ring, the fitting force thereof can also act to ensure the sealing effect with the valve stem guide as with the traditional means.

### Brief Description of the Drawings

Fig. 1 A cross-sectional view showing a valve stem seal according to the present invention in the mounted condition
Fig. 2 A cross-section of a valve stem seal unit in Fig. 1
Fig. 3 A cross-sectional view showing a valve stem seal according to a conventional example
Fig. 4 A cross-section of a valve stem seal unit in Fig. 3

### Best Mode for Carrying Out the Invention.

Hereinafter, this invention will be described by exemplifying a preferred embodiment with the reference to the drawings.

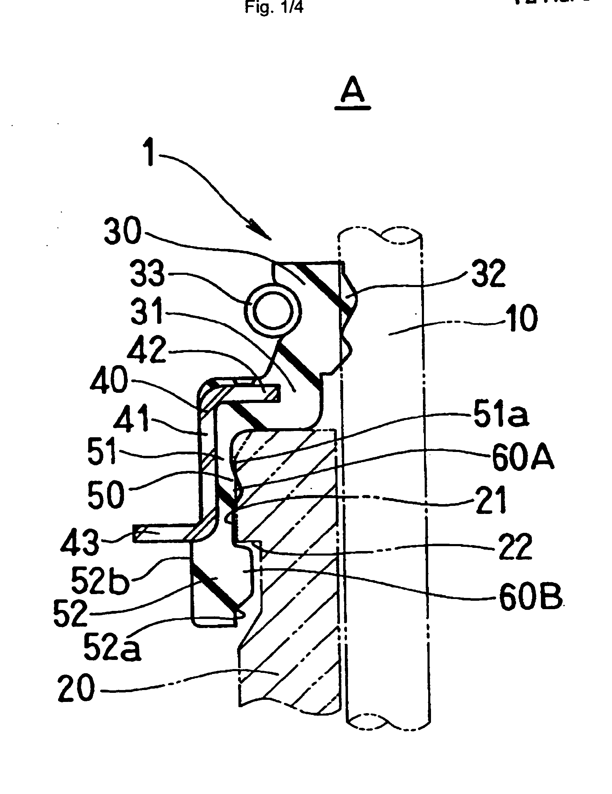

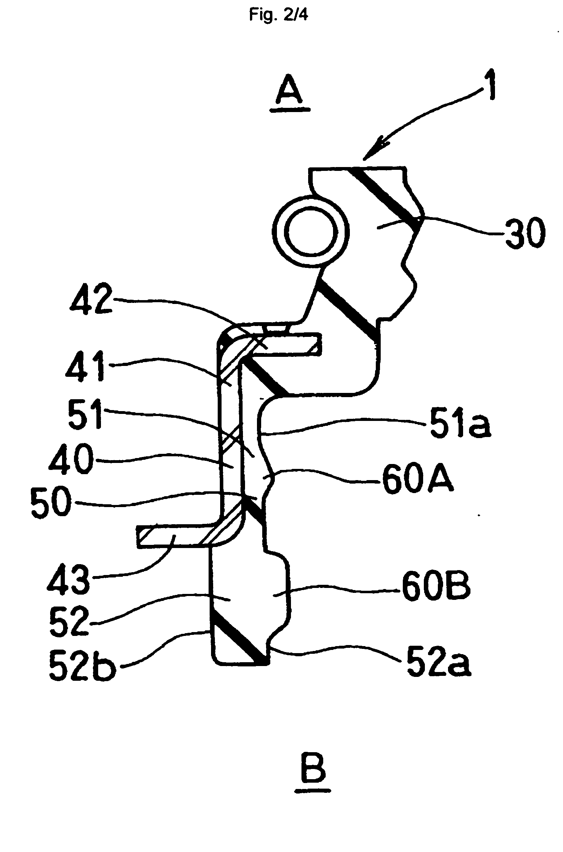

Fig. 1 is a cross-sectional view showing a valve stem seal to which the present invention was applied in the mounted condition, and Fig. 2 is a cross-section of the valve stem seal unit in Fig. 1.

A valve stem seal 1 according to the present invention is for sealing the peripheral surface of a valve stem 10 used where a valve for intake and exhaust of an internal combustion engine is arranged at the opposite of the sealing fluid side, is mounted by fitting into the end part of the sealing fluid side-A at the outer peripheral side of a valve stem guide 20, and is comprising a seal lip 30, an attachment ring 40 and an inner peripheral fitting part 50.

The seal lip 30 is molded of the rubber elastic body and arranged at the end part of the sealing fluid side-A of the attachment ring 40 discussed below, a lip base 31 is adhered to the attachment ring 40, a lip tip part 32 extending from the lip base 31 thereof toward the sealing fluid side-A is provided so as to be slidably and closely in contact with the valve stem 10, and a garter spring 33 for radially applying a tension is mounted at the outer peripheral side of the lip tip part 32 .

The attachment ring 40 is molded of metal, is comprising a cylindrical portion 41, an inner diameter flange part 42 extending from the end part of the sealing fluid side-A of the cylindrical portion 41 thereof to the inner diameter direction; and an outer diameter flange part 43 extending from the end part of the opposite of the sealing fluid side-B of the cylindrical portion 41 to the outer diameter direction, and the lip base 31 is adhered to the inner diameter flange part 42 so as to cover thereof, and the cylindrical portion 41 is provided so as to be fitted into an outer peripheral surface 21 of the valve stem guide 20.

The inner peripheral fitting part 50 is integrally molded with the seal lip 30 by the rubber elastic body, is arranged at the inner peripheral side of the cylindrical portion 41 of the attachment ring 40, and is formed with an inner peripheral fitting part 51 of the sealing fluid side having a fitting projections 60A of the sealing fluid side formed on an inner peripheral surface 51 a, and with an inner peripheral fitting part 52 of the opposite of a sealing fluid side provided so as to protrude from the sealing fluid side-B opposite from the outer diameter flange part 43 of the attachment ring 40, and integrally molded with the inner peripheral fitting part 51 of the sealing fluid side.

In the inner peripheral fitting part 52 of the opposite side of the sealing fluid side, an fitting projections 60B of the opposite of the sealing fluid side fitted with a concave part 22 formed on the outer peripheral surface 21 of the valve stem guide 20 is formed on an inner peripheral surface 52a thereof, and an outer peripheral surface 52b is not covered with the attachment ring 40, and therefore is thicker in the outer diameter direction than the inner peripheral fitting part 51 of the sealing fluid side.

The valve stem seal 1 constituted as described above is mounted by inserting from the sealing fluid side-A and fitting the inner peripheral fitting part 50 thereof into the outer peripheral surface 21 of the valve stem guide 20. In this case, the outer peripheral surface 52b of the inner peripheral fitting part 52 of the opposite of the sealing fluid side on which the fitting projections 60B of the opposite of the sealing fluid side is formed, us not covered with the attachment ring 40, thereby the thickness can be increased in the outer diameter direction from the inner peripheral fitting part 51 of the sealing fluid side to increase the rigidity, and the load difference (load reduction amount) at the time when the fitting projections 60B of the opposite of the sealing fluid side is fitted into the concave part 22 formed on the outer peripheral surface 21 of the valve stem guide 20 can be increased. Accordingly, when hand assembling, the mounting feel ("JUST" feel) at the time of fitting the fitting projections 60B of the opposite of the sealing fluid side into the concave part 22 can be felt and confirmed by hand, and thereby the reconfirmation work is eliminated and the work efficiency can be improved.

Moreover, even when the thickness of the inner peripheral fitting part 52 of the opposite of the sealing fluid side is increased to enhance the rigidity, the outer peripheral surface 52b is not covered with the metal attachment ring 40 and thus the outer peripheral side can be bent to the outer peripheral side, and even when the fitting projections 60B of the opposite of the sealing fluid side formed on the inner peripheral surface 52a is made to fit into the concave part 22 formed on the valve stem guide 20, hand assembling can be performed.

Furthermore, the inner peripheral fitting part 51 of the sealing fluid side having the fitting projections 60A of the sealing fluid side formed thereon is arranged at the inner peripheral side of the cylindrical portion 41 of the attachment ring 40, therefore the inner peripheral fitting part 51 of the sealing fluid side can be made to fit into the outer peripheral surface 21 of the valve stem guide 20, for the fitting projections 60A of the sealing fluid side formed on the inner peripheral surface 51a to be drawn and pressed onto, the fitting force of the attachment ring 40 can also act to ensure the sealing effect as before.

## Claims

1. An arrangement comprising a valve stem seal (1) comprising a seal lip (30) for sealing a valve stem (10), an attachment ring (40) having said seal lip (30) arranged at the end part of a sealing fluid side (A) thereof and an inner peripheral fitting part (50) of a rubber elastic body having a plurality of the fitting projections (60A, 60B) formed axially side-by-side on the inner peripheral surface thereof, whereas the fitting projections (60B) of the opposite of the sealing fluid side (B) among said fitting projections (60A, 60B) are other than said fitting projections (60A) of the sealing fluid side (A), the valve stem seal (1) comprising a seal lip (30) for sealing the valve stem (10), a metal attachment ring (40) having said seal lip (30) arranged at the end part of the sealing fluid side (A) thereof and an inner peripheral fitting part (50) of a rubber elastic body having a plurality of the fitting projections (60A, 60B) formed axially side-by-side on the inner peripheral surface thereof, wherein the fitting projections (60B) of the opposite of the sealing fluid side (B) among said fitting projections (60A, 60B) are fitted and mounted to a concave part (22) formed on the outer peripheral surface of a valve stem guide (20), and wherein said inner peripheral fitting part (50) is formed with: the inner peripheral fitting part (51) of the sealing fluid side (A) arranged at the inner peripheral side of said attachment ring (40), and having the fitting projections (60A) other than said fitting projections (60B) of the opposite of the sealing fluid side (B) formed on the inner peripheral surface thereof; **characterized in that** said inner peripheral fitting part (50) is formed with the inner peripheral fitting part (52) of the opposite of the sealing fluid side (B) thicker than the inner peripheral fitting part (51) of the sealing fluid side (A), formed so as to protrude from the end part of the opposite of the sealing fluid side (B) of said attachment ring (40), and having said fitting projections (60B) of the opposite of the sealing fluid side (B) formed on the inner peripheral surface thereof.

2. An arrangement according to claim 1, wherein an inner peripheral fitting part (52) of the opposite of the sealing fluid side (B) is thicker than an inner peripheral fitting part (51) of the sealing fluid side (A), formed so as to protrude from the end part of the opposite of the sealing fluid side (B) of said attachment ring (40), and having said fitting projections (60B) of the opposite of the sealing fluid side (B) formed on the inner peripheral surface thereof.

3. An arrangement according to claim 1 or 2, wherein said inner peripheral fitting part (50) is formed with: an inner peripheral fitting part (51) of the sealing fluid side (A) arranged at the inner peripheral side of said attachment ring (40), and having the fitting projections (60A) other than said fitting projections (60B) of the opposite of the sealing fluid side (B) formed on the inner peripheral surface thereof.

4. An arrangement according to one of the claims 1 to 3, wherein the attachment ring (40) is comprising a cylindrical portion (41), an inner diameter flange part (42) extending from the end part of the sealing fluid side (A) of the cylindrical portion (41) thereof to the inner diameter direction, and an outer diameter flange part (43) extending from the end part of the opposite of the sealing fluid side (B) of the cylindrical portion (41) to the outer diameter direction.

## Patentansprüche

1. Anordnung mit einer Ventilschaftdichtung (1) mit einer Dichtlippe (30) zur Abdichtung eines Ventilschafts (10), einem Befestigungsring (40), der die Dichtlippe (30) aufweist, die am Endteil einer Dichtungsfluidseite (A) davon angeordnet ist, und einem Innenumfangspassteil (50) mit einem gummielastischen Körper, der mehrere Passvorsprünge (60A, 60B) aufweist, die axial nebeneinander an der Innenumfangsfläche davon ausgebildet sind, wobei die Passvorsprünge (60B) auf der gegenüberliegenden Dichtungsfluidseite (B) von den Passvorsprüngen (60A, 60B) von den Passvorsprüngen (60A) der Dichtungsfluidseite (A) verschieden sind, wobei die Ventilschaftdichtung (1) Folgendes umfasst: eine Dichtlippe (30) zur Abdichtung des Ventilschafts (10), einen metallischen Befestigungsring (40), der die Dichtlippe (30) aufweist, die am Endteil der Dichtungsfluidseite (A) davon angeordnet ist, und einen Innenumfangsteil (50) mit einem gummielastischen Körper, der mehrere Passvorsprünge (60A, 60B) aufweist, die axial nebeneinander an der Innenumfangsfläche davon ausgebildet sind, wobei die Passvorsprünge (60B) auf der gegenüberliegenden Dichtungsfluidseite (B) von den Passvorsprüngen (60A, 60B) an einem konkaven Teil (22) angeordnet und angebracht sind, der an der Außenumfangsfläche einer Ventilschaftführung (20) ausgebildet ist, und wobei der Innenumfangspassteil (50) so ausgebildet ist, dass der Innenumfangspassteil (51) auf der Dichtungsfluidseite (A) auf der Innenumfangsseite des Befestigungsrings (40) angeordnet ist, und wobei die Passvorsprünge (60A), die von den Passvorsprüngen (60B) auf der gegenüberliegenden Dichtungsfluidseite (B) verschieden sind, an der Innenumfangsfläche davon ausgebildet sind, **dadurch gekennzeichnet, dass** der Innenumfangspassteil (50) so ausgebildet ist, dass der Innenumfangspassteil (52) auf der gegenüberliegenden Dichtungsfluidseite (B) dicker ist als der Innenumfangspassteil (51) der Dichtungsfluidseite (A) und so ausgebildet ist, dass er von dem Endteil auf der gegenüberliegenden Dichtungsfluidseite (B) des Befestigungsrings (40) ragt, und wobei die Passvorsprünge (60B) auf der gegenüberliegenden Dichtungsfluidseite (B) an der Innenumfangsfläche davon ausgebildet sind.

2. Anordnung nach Anspruch 1, wobei ein Innenumfangspassteil (52) auf der gegenüberliegenden Dichtungsfluidseite (B) dicker ist als ein Innenumfangspassteil (51) auf der Dichtungsfluidseite (A) und so ausgebildet ist, dass er von dem Endteil auf der gegenüberliegenden Dichtungsfluidseite (B) des Befestigungsrings (40) ragt, und wobei die Passvorsprünge (60B) auf der gegenüberliegenden Dichtungsfluidseite (B) an der Innenumfangsfläche davon ausgebildet sind.

3. Anordnung nach Anspruch 1 oder 2, wobei der Innenumfangspassteil (50) mit einem Innenumfangspassteil (51) auf der Dichtungsfluidseite (A), der auf der Innenumfangsseite des Befestigungsrings (40) angeordnet ist, ausgebildet ist, und wobei die Passvorsprünge (60A), die von den Passvorsprüngen (60B) auf der gegenüberliegenden Dichtungsfluidseite (B) verschieden sind, an der Innenumfangsfläche davon ausgebildet sind.

4. Anordnung nach einem der Ansprüche 1 bis 3, wobei der Befestigungsring (40) aus einem zylindrischen Teil (41), einem Innendurchmesserflanschteil (42), der sich von dem Endteil der Dichtungsfluidseite (A) des zylindrischen Teils (41) davon in Innendurchmesserrichtung erstreckt, und einem Außendurchmesserflanschteil (43), der sich von dem Endteil auf der gegenüberliegenden Dichtungsfluidseite (B) des zylindrischen Teils (41) in Außendurchmesserrichtung erstreckt, besteht.

## Revendications

1. Agencement comprenant un joint de tige de soupape (1) comprenant une lèvre d'étanchéité (30) pour sceller une tige de soupape (10), une bague de fixation (40) ayant ladite lèvre d'étanchéité (30) disposée à la partie d'extrémité d'un côté du fluide d'étanchéité (A) de celle-ci et une partie d'ajustement périphérique interne (50) d'un corps élastique en caoutchouc ayant une pluralité de saillies d'ajustement (60A, 60B) formées axialement côte à côte sur la surface périphérique interne de celui-ci, les saillies d'ajustement (60B) du côté opposé au fluide d'étanchéité (B) parmi les saillies d'ajustement (60A, 60B) étant différentes desdites saillies d'ajustement (60A) du côté du fluide d'étanchéité (A), le joint de tige de soupape (1) comprenant une lèvre d'étanchéité (30) pour sceller la tige de soupape (10), une bague de fixation en métal (40) ayant ladite lèvre d'étanchéité (30) disposée à la partie d'extrémité d'un côté du fluide d'étanchéité (A) de celle-ci et une partie d'ajustement périphérique interne (50) d'un corps élastique en caoutchouc ayant une pluralité de saillies d'ajustement (60A, 60B) formées axialement côte à côte sur la surface périphérique interne de celui-ci, les saillies d'ajustement (60B) du côté opposé au fluide d'étanchéité (B) parmi les saillies d'ajustement (60A, 60B) étant ajustées et montées sur une partie concave (22) formée sur la surface périphérique externe d'un guide de tige de soupape (20), et ladite partie d'ajustement périphérique interne (50) étant formée avec : la partie d'ajustement périphérique interne (51) du côté du fluide d'étanchéité (A) disposée sur le côté périphérique interne de ladite bague de fixation (4), et ayant les saillies d'ajustement (60A) différentes desdites saillies d'ajustement (60B) du côté opposé au fluide d'étanchéité (B) formées sur la surface périphérique interne de celle-ci, **caractérisé en ce que** ladite partie d'ajustement périphérique interne (50) est formée avec la partie d'ajustement périphérique interne (52) du côté opposé au fluide d'étanchéité (B) plus épaisse que la partie d'ajustement périphérique interne (51) du côté du fluide d'étanchéité (A), formée de manière à faire saillie depuis la partie d'extrémité du côté opposé au fluide d'étanchéité (B) de ladite bague de fixation (40), et ayant lesdites saillies d'ajustement (60B) du côté opposé au fluide d'étanchéité (B) formées sur la surface périphérique interne de celle-ci.

2. Agencement selon la revendication 1, dans lequel une partie d'ajustement périphérique interne (52) du côté opposé au fluide d'étanchéité (B) est plus épaisse qu'une partie d'ajustement périphérique interne (51) du côté du fluide d'étanchéité (A), formée de manière à faire saillie depuis la partie d'extrémité du côté opposé au fluide d'étanchéité (B) de ladite bague de fixation (40), et ayant lesdites saillies d'ajustement (60B) du côté opposé au fluide d'étanchéité (B) formées sur la surface périphérique interne de celle-ci.

3. Agencement selon la revendication 1 ou 2, dans lequel ladite partie d'ajustement périphérique interne (50) est formée avec : une partie d'ajustement périphérique interne (51) du côté du fluide d'étanchéité (A) agencée sur le côté périphérique interne de ladite bague de fixation (40), et ayant les saillies d'ajustement (60A) différentes desdites saillies d'ajustement (60B) du côté opposé au fluide d'étanchéité (B) formées sur la surface périphérique interne de celle-ci.

4. Agencement selon l'une quelconque des revendications 1 à 3, dans lequel la bague de fixation (40) comprend une portion cylindrique (41), une partie de bride de diamètre intérieur (42) s'étendant depuis la partie d'extrémité du côté du fluide d'étanchéité (A) de la portion cylindrique (41) de celle-ci, dans la direction du diamètre intérieur, et une partie de bride de diamètre extérieur (43) s'étendant depuis la partie d'extrémité du côté opposé au fluide d'étanchéité (B) de la portion cylindrique (41) dans la direction du diamètre extérieur.
